(19) Europäisches Patentamt
European Patent Office
Office européen des brevets

(11) **EP 0 799 568 B1**

(12) **FASCICULE DE BREVET EUROPEEN**

(45) Date de publication et mention
de la délivrance du brevet:
**30.08.2000 Bulletin 2000/35**

(51) Int Cl.⁷: **A01N 25/02**, A01N 25/34

(21) Numéro de dépôt: **97400772.6**

(22) Date de dépôt: **03.04.1997**

(54) **Supports imprégnés d'une composition désinfectante**

Mit einem Desinfektionsmittel imprägnierte Träger

Support impregnated with a disinfecting composition

(84) Etats contractants désignés:
**DE ES FR GB IT**

(30) Priorité: **04.04.1996 FR 9604235**

(43) Date de publication de la demande:
**08.10.1997 Bulletin 1997/41**

(73) Titulaire: **FINANCIERE ELYSEES BALZAC**
**F-75008 Paris (FR)**

(72) Inventeurs:
• **Pierre, Michel**
**60000 Beauvais (FR)**
• **Bourgeois, Michel**
**69003 Lyon (FR)**

(74) Mandataire: **Le Roux, Martine et al**
**Cabinet Beau de Loménie**
**158, rue de l'Université**
**75340 Paris Cédex 07 (FR)**

(56) Documents cités:
**EP-A- 0 038 416**     **FR-A- 2 197 556**
**FR-A- 2 623 993**     **US-A- 5 414 124**

**Description**

La présente invention a pour objet des supports imprégnés de compositions désinfectantes. Les compositions en question sont des compositions liquides à base d'un solvant S. Elles renferment dans ledit solvant S une quantité efficace d'au moins un désinfectant D. Par désinfectant, on entend dans la présente demande, tout produit - liquide ou solide, à température ambiante - qui développe une action spécifique sur un (des) micro-organisme(s) en vue de limiter voire stopper le développement du(des)dit(s) micro-organisme(s); ladite action pouvant consister en une action antibactérienne (bactériostatique et/ou bactéricide), antifongique (antimoisissure et/ou antilevure), antialgue, antivirus.

La Demanderesse a abordé le problème de l'élaboration de compositions désinfectantes actives, non volatiles, convenant tout particulièrement à la décontamination de surfaces; surfaces d'objets (tels des plans de travail, des cuvettes de toilette, des combinés téléphoniques, des portes, des fenêtres ...) ou surfaces corporelles. Lesdites compositions peuvent être utilisées pour nettoyer des surfaces par les méthodes connues d'immersion, de lavage, de pulvérisation, avec ou sans l'intermédiaire d'un support d'application du type chiffon, éponge, papier ... Lesdites compositions conviennent tout particulièrement pour l'élaboration de supports imprégnés destinés à la décontamination de surfaces; lesdits supports pouvant être stockés sans précautions particulières. Lesdites compositions, telles quelles ou imprégnées sur un support, peuvent en effet être stockées sans précautions particulières, dans des emballages non sophistiqués voire hors de tout emballage, dans la mesure où l'on n'observe pas d'évaporation dommageable pour leur activité. Ceci est précisé plus avant dans le présent texte.

Selon l'art antérieur, on propose dans le commerce différents types de produits de désinfection de surfaces; et notamment :

a) des solutions aqueuses renfermant des agents désinfectants qui sont appliquées aux surfaces en plein bain - par exemple, pour la désinfection d'outils chirurgicaux ou de biberons - ou par pulvérisation, aspersion ou encore à l'aide d'un support ... Ces solutions aqueuses présentent l'inconvénient de s'évaporer;

b) des mousses ou pâtes désinfectantes;

c) des aérosols désinfectants à base d'huiles et d'essences naturelles;

d) des supports imprégnés humides qui présentent l'inconvénient de sécher à l'air et même durant leur stockage; si bien qu'ils ne sont disponibles qu'en boites hermétiques ou en sachets refermables;

e) des supports imprégnés secs qui sont utilisables, une fois remouillés;

f) des supports de nettoyage à effet antibactéricn permanent, ledit effet se limitant à garantir l'hygiène interne desdits supports. On a incorporé au sein desdits supports les biocides adéquats.

On peut considérer que les supports imprégnés de l'invention, se situent dans le contexte des produits d) ci-dessus, sans présenter leurs inconvénients.

On a plus précisément décrit, selon l'art antérieur, des outils désinfectants à base de supports enduits de compositions désinfectantes aqueuses ou hydrophobes.

Il est ainsi décrit, dans la demande FR-A-2 623 993, un textile imprégné d'une composition aqueuse, à conditionner dans des emballages hermétiques, et convenant tout particulièrement au nettoyage de surfaces du type verre, miroir ... Ladite composition aqueuse est du type des produits a) ci-dessus; ledit textile du type des produits d) ci-dessus.

Il est également décrit, dans la demande FR-A-2 197 556, un produit d'essuyage constitué d'un nontissé imprégné d'un mélange d'huile minérale, de térébenthine et de produits bactéricides et antifongiques. Les huiles minérales sont des mélanges d'hydrocarbures hydrophobes volatils tels les essences ou moins volatils comme les huiles, cires et paraffines. La térébenthine est une gomme extraite des arbres, hydrophobe et volatile. La composition intervenant ici est éminemment hydrophobe et non miscible à l'eau.

Par ailleurs, il a été proposé, dans la demande EP-A-38 416, des désinfectants renfermant une combinaison de principes actifs dans un milieu solvant bipolaire. Ledit milieu solvant renferme toujours de l'eau en une quantité importante.

On propose présentement de nouveaux supports imprégnés de compositions désinfectantes, prêtes à l'emploi, renfermant au moins un désinfectant D (en quantité efficace) dans un solvant S. Lesdites compositions, utiles aux fins de l'invention, originales par la nature dudit solvant S, sont décrites ci-après.

Ledit solvant S présente une température d'ébullition supérieure à 200 °C et est miscible avec l'eau à raison d'au moins 2% en poids d'eau dans ledit solvant S. Ledit solvant S, au sein des compositions désinfectantes utilisées selon l'invention, intervient pour au moins 80% en poids. Lesdites compositions sont particulièrement performantes.

Lesdites compositions désinfectantes utilisées selon l'invention sont à base d'un solvant S, non volatil et se caractérisent donc par une absence d'évaporation ou une faible évaporation dans les conditions habituelles de pression (environ 1 bar) et de température (de - 20°C à + 40 °C). Ledit solvant S, avantageusement, présente une température d'ébullition supérieure ou égale à 250°C.

Lesdites compositions utilisées selon l'invention peuvent donc être stockées et utilisées, notamment imprégnées sur des supports, sans que se pose le problème de leur évaporation. Elles et les supports en renfermant ne nécessitent pas, pour leur stockage, d'emballages sophistiqués, hermétiques. Elles et les supports en renfermant sont stables au stockage.

Ledit solvant S peut consister :

- en un solvant pur : S = s
- en un mélange de solvants purs : S = Σs
- en un mélange d'au moins un solvant pur et d'au moins un produit P destiné à abaisser la tension de vapeur dudit solvant pur ou dudit mélange de solvants purs : S = s + P ou S = s + ΣP ou S = Σs + P ou S = Σs + ΣP.

Quelle que soit sa composition exacte, il présente donc une température d'ébullition élevée ($\theta_b$ > 200°C et avantageusement $\theta_b \geq$ 250°C), nettement supérieure à la température normale de stockage et d'utilisation des compositions désinfectantes le contenant.

On précise ci-après, à titre nullement limitatif, la nature de solvants purs qui peuvent servir de base aux compositions désinfectantes, utilisées selon l'invention :

- le formamide        ($\theta_b$ = 210°C)    $CH_3NO$
- le dipropylèneglycol       ($\theta_b$ = 230°C)    $C_6H_{14}O_3$
- l'hexylèneglycol       ($\theta_b$ = 244°C)    $C_6H_{14}O_2$
- le cinnamaldéhyde       ($\theta_b$ = 246°C)    $C_9H_8O$
- le diéthylèneglycol (DEG)       ($\theta_b$= 250°C)    $C_4H_{10}O_3$
- le diéthylèneglycol-dibutyléther       ($\theta_b$ = 256°C)    $C_{12}H_{26}O_3$
- l'hexanoate de 2-éthylhexyle       ($\theta_b$= 267°C)    $C_{14}H_{28}O_2$
- le triéthylèneglycol (TEG)       ($\theta_b$ = 290°C)    $C_6H_{14}O_3$
- le glycérol (Gly)       ($\theta_b$= 290°C)    $C_3H_8O_3$

On préfère tout particulièrement les solvants du type alcool lourd, tel le glycérol, le diéthylèneglycol, le triéthylèneglycol ou le dipropylèneglycol, qui présentent un léger caractère hygroscopique.

Lesdits solvants, comme déjà indiqué ci-dessus, peuvent au sein des compositions intervenir en mélange; mélanges entre eux et/ou avec au moins un produit tiers P, tel que précisé ci-dessus (apte à abaisser la tension de vapeur de S).

Avantageusement, le solvant S est per se hygroscopique et/ou renferme au moins un produit hygroscopique. Une telle propriété du solvant S - tendance à absorber l'eau - renforce l'activité désinfectante des compositions le renfermant. Dans le cadre de cette variante on choisit comme solvant S du glycérol ou du diéthylèneglycol et/ou on met en solution dans celui-ci au moins un produit hygroscopique tel le chlorure de calcium et/ou le chlorure de magnésium et/ou l'urée.

Un tel produit hygroscopique peut faire office de produit P; i.e. que son intervention peut permettre d'abaisser la tension de vapeur du mélange.

En tout état de cause, le solvant S renfermant éventuellement au moins un produit P et/ou au moins un produit hygroscopique (qui peut constituer un produit P) conserve une température d'ébullition supérieure à 200°C (et intervient pour au moins 80% en poids dans les compositions utilisées selon l'invention).

Ledit solvant S présente, outre sa température d'ébullition élevée, une autre caractéristique essentielle : il est miscible, à raison d'au moins 2 % en poids avec l'eau. Il convient d'entendre par là qu'il tolère l'addition d'au moins 2 % en poids d'eau en son sein, sans se troubler et sans générer deux phases de démiction. En d'autres termes, ledit solvant S présente un certain caractère hydrophile.

Les solvants purs listés précédemment présentent ce caractère hydrophile. On précise ici, à toutes fins utiles, que l'hexanoate de 2-éthylhexyle convient dans la mesure où il présente un azéotrope avec 3,6 % d'eau.

De cette miscibilité partielle du solvant S avec l'eau, il découle, pour les compositions désinfectantes utilisées selon l'invention, de nombreux avantages, notamment au niveau de leur efficacité .

En effet, lesdites compositions ont pour application principale la désinfection en milieu ménager où domine la présence d'eau. Il convient, dans ce contexte, que le principe actif désinfectant D contenu dans lesdites compositions puisse migrer dans l'eau polluée et ne se contente pas d'agir à l'interface entre ladite eau polluée et le solvant S. Grâce à la miscibilité au moins partielle dudit solvant S avec l'eau, les dépôts aqueux contaminés sont absorbés, permettant au désinfectant D de la composition d'avoir une action in situ et pas seulement à l'interface. De la même façon, grâce à leur caractère hydrophile et avantageusement hygroscopique, les compositions de l'invention sont directement accessibles et disponibles pour une rapide action biocide à la surface hydrophile des germes.

On indique ici, à titre comparatif, qu'une composition à base d'huile de paraffine ($\theta_b \simeq$ 400°C) contenant un bactéricide n'exprime généralement pas l'activité bactéricide de celui-ci dans la mesure où elle n'est pas hydrophile.

On met, par ailleurs, à profit cette miscibilité partielle de l'eau dans S :

- lors de la préparation de supports imprégnés des compositions désinfectantes à base de S; et
- lors de la préparation desdites compositions désinfectantes per se.

La préparation des supports imprégnés peut ainsi faire intervenir de l'eau (ou un autre solvant hydrophile) en vue d'une meilleure imprégnation desdits supports (hydrophiles), eau (ou autre solvant hydrophile) qui est appelée à s'évaporer. Ladite eau (ou tout autre solvant hydrophile) améliore la mouillabilité du support hydrophile par la composition désinfectante. Quelle que soit la nature du support - qu'il présente un caractère hydrophile ou hydrophobe - l'eau (ou tout autre solvant) peut intervenir à titre d'agent extendeur pour une optimisation de l'imprégnation.

La miscibilité au moins partielle de l'eau dans le solvant S permet enfin l'incorporation directe dans S de désinfectants disponibles en solution dans des solvants hydrophiles, généralement de désinfectants disponibles en solution aqueuse ou alcoolique.

Ceci est un plus non négligeable qui rend, dans la plupart des cas, aisée la préparation des compositions désinfectantes de l'invention.

Les compositions utilisées selon l'invention se caractérisent donc par la nature du solvant S qu'elles renferment. Il s'agit d'un liquide non aqueux, relativement "inerte" à l'évaporation et qui est toutefois apte à permettre l'expression de l'action du (des) désinfectant(s) D qu'il renferme (en solution, et/ou en suspension, et/ou en mélange) sur des surfaces mouillées.

On optimise le choix du solvant S, qui présente les critères requis de température d'ébullition et de miscibilité à l'eau, en tenant compte, par exemple, de son aptitude à dissoudre l'(les) agent(s) désinfectant(s) intervenant(s), de sa viscosité, de ses propriétés désinfectantes intrinsèques, de son toucher, de son odeur, de son innocuité et/ou de sa toxicité envers le manipulateur et/ou les surfaces à traiter ...

On a vu que ledit solvant S représente au moins 80 % en poids des compositions désinfectantes utilisées selon l'invention. Il représente avantageusement au moins 90 % en poids desdites compositions et de façon particulièrement préférée plus de 95 % en poids.

On précise ici que le(s) désinfectant(s) D n'est (ne sont) pas forcément en solution dans le solvant S. S et D peuvent constituer une solution, une dispersion ou une émulsion.

On a vu que le solvant S intervient pour au moins 80 % en poids dans les compositions de l'invention et que le désinfectant D peut être amené dans ledit solvant S en solution dans un solvant, généralement un solvant hydrophile du type eau ou alcool.

Compte tenu de ce mode d'introduction de D dans S ou pour toute autre raison, les compositions utilisées selon l'invention peuvent renfermer outre le(s)dit(s) désinfectant D et ledit solvant S (éventuellement chargé en au moins un produit P et/ou au moins un produit hygroscopique) un autre solvant S' (solvant pur ou mélange de solvants). Ledit solvant S' présente lui-aussi une miscibilité au moins partielle avec l'eau ($\geq 2$ % en poids) et se distingue toutefois de S par sa température d'ébullition. Il est plus volatil : sa température d'ébullition est inférieure ou égale à 200°C. Son intervention ne doit pas remettre en cause le caractère non volatil des compositions de l'invention. Ledit solvant S' ($\theta_b \leq 200$°C) intervient toujours pour moins de 20 % en poids dans les compositions de l'invention, avantageusement pour moins de 10 % en poids et de façon particulièrement préférée, pour moins de 5 % en poids (voire pour moins de 2 % en poids). Il consiste avantageusement en un solvant hydrophile choisi parmi l'éther, l'acétone, l'eau et les alcools. De façon encore plus avantageuse, il consiste en l'eau ou en un alcool.

Ledit solvant S', de par son caractère volatil, est appelé à s'évaporer et sa teneur dans les compositions désinfectantes de l'invention diminue donc généralement avec le temps.

Dans ce contexte, on conçoit que des compositions utilisées selon l'invention puissent évoluer dans le temps, sans préjudice quant à leur activité. Elles s'enrichissent en solvant S (au détriment du solvant S'). Un tel enrichissement peut même se traduire par un changement d'état. Un désinfectant D, amené en solution dans S', s'il est insoluble ou non miscible dans S, peut au bout d'un certain temps générer des compositions désinfectantes de l'invention à deux phases principales :

solide (D) / liquide (S)
ou
liquide (D) / liquide (S).

De telles compositions à plusieurs phases peuvent être utilisées selon invention. On peut par ailleurs mettre à profit cette "instabilité" de certaines compositions pour précipiter in situ, dans la structure d'un support, un désinfectant D.

Pour ce qui concerne le désinfectant D, il est avantageusement miscible dans S mais au vu de ce qui précède, ceci n'est nullement obligatoire.

Peuvent intervenir dans les compositions utilisées selon l'invention tous types de désinfectants. Selon les applications envisagées, le désinfectant ou le mélange de désinfectants est choisi selon son spectre d'action, en tenant compte de ses propriétés de non toxicité ou d'innocuité.

Ainsi, pour une application bactéricide, on peut choisir le(s) désinfectant(s) parmi les bactéricides connus tels les ammoniums quaternaires, les dérivés du phénol, les huiles bactéricides, les composés libérant du formol ... et avantageusement parmi les bactéricides actifs à faible concentration.

Ainsi, pour une application fongicide, on peut choisir le(s) désinfectant(s) parmi les fongicides connus tels les huiles essentielles, l'oxyde de zinc, les composés organo-mercuriels ou organostanniques, le pentachlorophénol, les dithiocarbamates, les isothiazolinones, la tétrachloropyridineméthylsulfone, le (N-diméthylamino-N-phénol-N'-fluorodichlorométhylthio)sulfamide, la N-fluorodichlorométhylthiophtalimide ... et avantageusement les fongicides actifs à faible concentration.

On peut notamment utiliser, dans les compositions utilisées selon l'invention, les biocides ou désinfectants cationiques (très efficaces mais sensibles aux détergents anioniques) et non ioniques commerciaux ci-après :

- le BTC 2125 M, liquide aqueux à 50 %, biocide cationique consistant en un mélange de benzylalkoniums commercialisé par MILLCHEM U.K. Ltd. (ce biocide est référencé BTC dans les exemples ci-après);
- l'IRGASAN DP 300, solide non ionique, consistant en un triclosan inscrit sur la liste positive des cosmétiques, insoluble dans l'eau, soluble dans les alcools et commercialisé par CIBA-GEIGY (ce biocide est référencé Irgasan dans les exemples ci-après);
- le gluconate de chlorhexidine (noté GdCH), biocide cationique, commercialisé par ICI-Pharma;
- le Vantocil IB à 20 % , consistant en une biguanide cationique, commercialisé par ZENECA BIOCIDES;
- le PROMEXAL X50 à 5%, consistant en une isothiazolinone non ionique, commercialisé par ZENECA BIOCIDES;
- l'ACTICIDE 14 à 14%, consistant en un mélange aqueux d'isothiazolinones, commercialisé par THOR (ce biocide est référencé Acticide dans les exemples ci-après);
- les huiles biocides comme le thymol, le citronellol insolubles dans l'eau, miscibles dans les alcools (voir : "Ciblage de bactéries cutanées" de C. Viollon et J.-P. Chaumont dans "Parfums cosmétiques Arômes N° 116 avril, mai 1994 pp 67-69).

Lorsque les compositions désinfectantes utilisées selon l'invention renferment des désinfectants solides, on note que ceux-ci jouent le rôle de poudre récurante et/ou abrasive et désinfectante. D'une manière générale, des poudres notamment récurantes et/ou abrasives peuvent par ailleurs être ajoutées aux compositions de l'invention. Leur efficacité quant au nettoyage et donc à la décontamination de surface en est ainsi améliorée...

La présente invention concerne aussi la préparation des compositions désinfectantes décrites ci-dessus. Ladite préparation comprend l'incorporation dans un solvant S, d'au moins un désinfectant D; ledit désinfectant D intervenant éventuellement en solution dans ou en mélange avec un solvant S'. A l'issue d'une telle incorporation, on génère des compositions utilisées selon l'invention du type S + D ou du type S + D + S' (ce dernier type de compositions pouvant évoluer, suite à l'évaporation de S', vers des compositions du type S + D + $\varepsilon$S'). Ces types de compositions, S +D (ne renfermant pas de solvant S') ou S + D + $\varepsilon$S' (renfermant moins de 5 % en poids, voire moins de 2 % en poids, de S'; suite à l'intervention de très peu de S' ou suite à l'intervention de plus de S' suivi d'une évaporation conséquente de celui-ci) sont particulièrement préférés. Lesdites compositions du type S + D + $\varepsilon$S' résultent généralement de l'incorporation dans S d'au moins un désinfectant D sous forme commerciale, à savoir en solution aqueuse et/ou alcoolique S', solution S' fortement concentrée en ledit désinfectant D.

Les compositions désinfectantes ci-dessus peuvent être utilisées telles quelles sans l'intermédiaire d'un support d'application (en mettant en oeuvre, par exemple, des techniques du type immersion, pulvérisation...). Elles peuvent également être utilisées avec un support et ce selon notamment deux variantes de réalisation développées ci-après. A cette fin, on imprègne ledit support desdites compositions; De tels supports imprégnés desdites compositions désinfectantes constituent l'objet de la présente invention. L'imprégnation est réalisée par immersion et désaturation s'il y a lieu, par foulardage, couchage, impression, pulvérisation ou tout autre méthode connue de l'homme du métier. Le taux d'imprégnation peut être variable. De manière générale, fait partie intégrante de la présente invention l'utilisation des compositions originales décrites ci-dessus, notamment pour imprégner des supports (utilisation qui ne fait pas intervenir de dilution préalable). Les compositions désinfectantes de l'invention sont en effet des compositions prêtes à l'emploi.

Si l'on vise seulement à assurer l'hygiène interne du support (en référence au spectre désinfectant de D) - première variante de réalisation des supports de l'invention - on veille, par souci d'économie, à minimiser la quantité de composition introduite dans ledit support, étant bien entendu qu'il convient d'introduire une quantité efficace de désinfectant.

Si l'on souhaite, avec lesdits supports, élaborer des outils désinfectants de surface, i.e. des outils capables de restituer une partie active de la composition désinfectante - seconde variante de réalisation des supports de l'invention - on veille à les imprégner à un taux suffisant, de sorte qu'au cours de leur utilisation, ils relarguent une quantité efficace de désinfectant D. Dans un souci d'économie, dans le cadre de cette variante, on choisit un support qui ne retient que très peu la composition désinfectante; en d'autres termes, un support dont la rétention de ladite composition est faible (R ≤ 50 %). On définit plus loin dans le présent texte, au niveau des exemples, la méthode de mesure de la rétention de liquide (R) d'un support (méthode dérivée de la norme DIN 53814). On a ainsi constaté, dans le cadre de la présente invention, que les rétentions de liquides non volatils tels l'huile de paraffine KRISTOL et le glycérol étaient différentes, pour un même support, de sa rétention en eau.

On note ici que les outils capables de désinfecter les surfaces - outils consistant en ou comprenant dans leur structure un support imprégné à un taux adéquat d'une composition désinfectante de l'invention - sont a fortiori capables de se protéger contre les contaminations externes. Cette propriété est très importante car elle signifie qu'après l'essuyage d'une surface contaminée, il n'y a pas transfert des bactéries ou autre microorganisme par l'outil, par le support imprégné. Il ne peut pas y avoir de contamination ultérieure d'une autre surface par ledit outil. Les supports imprégnés d'une composition désinfectante de l'invention sont auto-protégés des micro-organismes sensibles au(x) désinfectant (s) D de ladite composition.

Les supports de l'invention, plus ou moins imprégnés des compositions désinfectantes décrites ci-dessus, peuvent consister en du papier, des éponges ou toiles-éponges cellulosiques, en des tissus, tricots ou des nontissés, en des mousses synthétiques ... Cette liste n'est nullement exhaustive. Lesdits supports - toute forme fibreuse ou poreuse souple convient - renferment généralement le désinfectant D en solution dans le solvant S mais il n'est pas exclu qu'ils renferment ledit désinfectant D, au moins en partie, précipité dans leur structure, imprégnée du solvant S.

Selon une variante préférée de l'invention, ledit support consiste en un nontissé de fibres de polypropylène et/ou de viscose, dont le grammage est compris entre 10 et 50 g/m$^2$, avantageusement entre 15 et 30 g/m$^2$.

On rappelle ici que ledit support peut être utilisé tel quel dans les opérations de nettoyage ou intégré dans la structure d'un outil.

L'invention est illustrée par les exemples ci-après.

On a préparé des compositions désinfectantes et des supports textiles imprégnés à des taux donnés desdites compositions. On a notamment caractérisé lesdits supports par leur taux de rétention et d'imprégnation en lesdites compositions.

On a évalué les performances desdits supports tant du point de vue de leur propriétés désinfectantes que du point de vue de leur hygiène interne.

Avant de préciser la nature et les procédés de préparation des produits testés, on décrit ci-après les procédures mises en oeuvre pour, respectivement :

- mesurer la rétention (ou pouvoir de rétention) des supports en lesdites compositions;
- tester les propriétés de décontamination de surface desdits supports imprégnés en lesdites compositions;
- tester leur degré de décontamination (d'hygiène) interne.

Mesure de la rétention des supports

La rétention de liquide par un support est mesurée, par la Demanderesse, selon la procédure suivante, dérivée de la norme DIN 53814 :

- on pèse l'échantillon conditionné (du support) : m (g) ;
- on l'immerge dans le liquide ;
- on le place verticalement dans le bol d'une centrifugeuse dont le diamètre interne est de 19,5 cm (centrifugeuse NEARV) revêtu d'un feutre de 2,5 mm d'épaisseur;
- on centrifuge alors à la consigne de 4 350 tr/min (D= 0,19 m) soit à 2 000 gravités pendant 3 minutes (en fait, 1 min de montée en vitesse + 2 min à 2 000 gravités). Le temps de freinage est ensuite de 20 secondes;
- on pèse, à l'issue de cette centrifugation, l'échantillon : M (g);
- on calcule sa rétention de liquide par la formule :

$$R\ (\%) = 100\ \frac{M\text{-}m}{m}$$

Le protocole de ladite norme DIN 53814 est analogue. Selon celui-ci, la centrifugation est mise en oeuvre pendant 20 minutes à 900 gravités.

La rétention des supports testés est donnée dans le tableau 2 ci-après.

Evaluation des propriétés désinfectantes

A) *Test de décontamination de surface*

On a utilisé la souche de germes ci-après :
**Staphylococcus aureus** (SA) ATCC 9144 (Gram +), souche résistante au séchage et parmi les souches les plus résistantes aux bactéricides.
On a procédé de la manière suivante :

-   préparé une suspension de germes à environ $10^7$ UFC/ml dans de l'eau peptonée diluée à 5% sans surfactant. 100 µl de cette suspension sont répartis le plus uniformément possible, en un ou plusieurs dépôts successifs d'une vingtaine de gouttes sur une lame de verre stérile (type lame de microscope). Ensuite la plaque porte-germes ainsi préparée est placée 45 minutes sous hotte à flux laminaire pour un séchage de la salissure, à une température comprise entre 25 et 30°C;
-   essuyé la plaque de verre porte-germes avec l'éprouvette (support imprégné de la composition désinfectante) qui a une dimension de 15 sur 15 cm. En fait, l'éprouvette est fixée sous un chariot de dimension 10 sur 10 cm à l'aide d'un élastique. La lame de verre, contaminée, séchée est positionnée sur un plan incliné à 30° qui a été préalablement stérilisé à l'alcool à 70°. Le chariot avec l'éprouvette est entraîné vers le haut et passe sur ladite lame de verre à une vitesse de 50 cm/s et sous une pression constante de 1kPa (environ 1kg/dm$^2$). Le chariot revient dans sa position initiale à la même vitesse en essuyant la lame une deuxième fois;
-   stocké la lame essuyée, durant 45 minutes, à la température ambiante en boite de Pétri;
-   dénombré les bactéries sur la lame de verre contaminée. Le dénombrement des UFC (Unités Formant Colonies) est réalisé dans un récipient contenant 10 ml d'eau peptonée additionnée d'un neutralisant (TWEEN 80® à 1g/l pour les ammoniums quaternaires tels que le BTC). Après une forte agitation pour décoller les bactéries survivantes du porte-germes et après dilutions, le nombre des UFC est mesuré.

Pour évaluer l'efficacité des compositions de l'invention et notamment celle des agents bactéricides introduits, les éprouvettes imprégnées desdites compositions sont comparées à des témoins :

-   témoin T constitué du même support non imprégné,
-   témoin $T_s$ constitué du même support enduit de la formulation (S) sans agent biocide.

De telles comparaisons sont utiles car, par exemple, l'essuyage seul d'une surface avec un support imprégné de solvant permet déjà d'éliminer une grande partie de sa contamination et cela, de façon classique, d'un facteur 100. On a aussi constaté que les éprouvettes imprégnées de liquides non volatils tel que le glycérol ($T_s$ = $T_{gly}$) présentent une certaine activité antibactérienne dans la mesure où lesdits liquides sont anhydres (hygroscopiques).
Il est donc procédé au test précédent avec le support témoin T, avec le support imprégné du solvant (S) seulement (dans le cas présent, de glycérol seulement : $T_{gly}$), avec le support imprégné des différentes compositions de l'invention (Si).
On a dénombré pour chaque test les UFC :

-   sur la surface avant essuyage (UFCo);
-   sur la surface après essuyage avec le support (UFC).

Les résultats de ces tests sont donnés dans le tableau 3 ci-après.

B) *test d'hygiène interne*

Pour évaluer l'efficacité des compositions de l'invention, le test est mené en parallèle avec des éprouvettes imprégnées desdites compositions (Si) et des éprouvettes témoins (T et Tgly, voir ci-dessus).
Ledit test correspondant à la norme SNV 195 924 est mis en oeuvre avec la souche de germes : **Pseudomonas aeruginosa** (PA) CIP A22 (Gram -), qui est parmi l'une des souches les plus résistantes aux bactéricides à l'état humide. Cette souche ne survit pratiquement pas à un séchage et il est donc exclu de faire appel à elle dans un test d'essuyage des surfaces.
On a procédé de la manière suivante :

-   versé 100 µl d'une suspension bactérienne à $10^5$ UFC/ml sur l'éprouvette d'une masse totale de 200 mg environ, placée dans une boîte de Pétri;

- placé l'éprouvette infectée, après incubation pendant 0 heure (5 minutes), 4 ou 24 heures, dans un tube avec 10 ml d'eau peptonée avec 1 g/l de TWEEN 80 ®. Le tube est alors agité au Vortex pendant 1 minute;
- dilué le liquide d'extraction par transfert de 1 ml de la suspension dans 9 ml d'eau peptonée. (Si nécessaire, on réalise plusieurs dilutions décimales successives, pour obtenir une population bactérienne qui puisse être dénombrée);
- placé 100 µl de la suspension bactérienne sur une gélose Mueller-Hinton stérile. On laisse incuber la gélose à l'étuve à 37°C pendant 24 heures. En l'absence de dilution mentionnée ci-dessus, la population bactérienne sur la plaque est initialement (UFCo) celle de la suspension initiale divisée par mille soit S.I./1 000;
- dénombré les UFC après le temps d'inoculation de 0, 4 ou 24 heures;
- évalué l'efficacité des compositions de l'invention en comparant les UFC des éprouvettes imprégnées des compositions de l'invention (Si) et des éprouvettes témoins (T et $T_{gly}$). Les résultats de ces tests sont donnés dans le tableau 4 ci-après.

On a préparé des compositions 1 à 5 à partir d'ingrédients du type : solvant S, désinfectant D, solvant hydrophile S' et produit P.

Dans le tableau 1 ci-après, on précise la composition, en pourcentages massiques, des mélanges initiaux , tels qu'ils ont été préparés, en introduisant généralement, pour les compositions 1 à 4 utilisées selon l'invention, les désinfectants D en solution aqueuse S'. Lesdits désinfectants D auraient aussi bien pu être introduits en solution alcoolique. La teneur en eau desdites compositions peut évoluer ...

## Tableau 1
## Compositions désinfectantes

| Compositions<br>Ingrédients | 1 | 2 | 3 | 4 | 5 |
|---|---|---|---|---|---|
| Glycérol (S) | | | 95 | 83 | 100 |
| DEG (S) | 91,7 | 94 | | | |
| BTC (D) | 2 | 2 | 1,5 | 8 | |
| Irgasan (D) | | 2 | | | |
| Acticide (D) | 0,6 | | 0,3 | | |
| CaCl$_2$ (P) | | | | 1 | |
| Eau (S') | 5,7 | 2 | 3,2 | 8 | – |

Pour la préparation de la composition 1, les deux désinfectants intervenants (le BTC et l'Acticide) sont ajoutés, séparément, en solutions aqueuses, dans le diéthylèneglycol.

Pour la préparation de la composition 2, les deux désinfectants intervenants (le BTC et l'Irgasan) sont ajoutés, séparément dans le diéthylèneglycol : le BTC en solution aqueuse et l'Irgasan en solution dans du diéthylèneglycol. A l'issue du mélange, compte tenu de la présence d'eau, on observe une précipitation de l'Irgasan. On utilise avantageusement ladite composition 2 qu'après une vive agitation destinée à l'homogénéiser.

Pour la préparation de la composition 3, les deux désinfectants intervenants (le BTC et l'Acticide) sont ajoutés, séparément, en solutions aqueuses, dans le glycérol.

Pour la préparation de la composition 4, le BTC intervient seul à titre de désinfectant. Il est ajouté en solution aqueuse dans le glycérol. On ajoute également du chlorure de calcium pour abaisser la tension de vapeur de la composition. Ledit chlorure de calcium renforce en outre l'hygroscopie du glycérol.

La composition 5, qui n'est pas une composition désinfectante convenant aux fins de l'invention ne renferme que du glycérol.

Avec lesdites compositions désinfectantes 1 à 5, on a imprégné par pulvérisation des éprouvettes (Si) d'un nontissé, en fibres de polypropylène, thermolié. de 25 g/m$^2$.

L'imprégnation a été mise en oeuvre à différents taux d'imprégnation avec la composition 1. Le taux d'imprégnation est donné par la formule :

$$\text{Imprégnation (\%)} = \frac{\text{Quantité pulvérisée}}{\text{Masse éprouvette avant pulvérisation}}$$

On indique dans le tableau 2 ci-après les caractéristiques desdites éprouvettes (ou supports Si) imprégnés.

A titre de témoin, on considère également des éprouvettes du support non imprégné (T) et des éprouvettes du support imprégné de la composition 5 : 100 % glycérol ($T_{gly}$).

Tableau 2

| Supports imprégnés | | | | | | | | |
|---|---|---|---|---|---|---|---|---|
| Supports | $S_1$ | $S_2$ | $S_3$ | $S_4$ | $S_5$ | $S_6$ | $T_{gly}$ | T(témoin) |
| Compositions | 1 | 1 | 1 | 2 | 3 | 4 | 5 | - |
| Taux d'imprégnation (%) | 33 | 15 | 10 | 33 | 33 | 33 | 33 | - |
| Taux de rétention (%) | 27 | 27 | 27 | 20 | 23 | 18 | 38 | - |

Les propriétés désinfectantes desdites éprouvettes ont été testées par la mise en oeuvre des tests précédemment décrits.

Pour les tests de décontamination de surface, on a donc utilisé la souche **Staphylococcus aureus** (SA). La lame contaminée est essuyée par lesdites éprouvettes après 45 minutes d'incubation.

Les résultats obtenus sont indiqués dans le tableau 3 ci-après.

Tableau 3

| Résultats des tests de décontamination de surfaces | | | | | | | | |
|---|---|---|---|---|---|---|---|---|
| Supports | $S_1$ | $S_2$ | $S_3$ | $S_4$ | $S_5$ | $S_6$ | Tgly | T |
| UFCo | 4 000 | 10 000 | 40 000 | 4 000 | 84 000 | 66 000 | 84 000 | 84 000 |
| UFC | 0 | 100 | 750 | 0 | 34 | 260 | 1 500 | 13 000 |

Pour la vérification de l'hygiène interne desdites éprouvettes, on a donc utilisé la souche **Pseudomonas aeruginosa** (PA). Les résultats obtenus sont indiqués dans le tableau 4 ci-après.

Tableau 4

| Résultats des tests d'hygiène des supports | | | | | | | | |
|---|---|---|---|---|---|---|---|---|
| Supports | $S_1$ | $S_2$ | $S_3$ | $S_4$ | $S_5$ | $S_6$ | $T_{gly}$ | T |
| UFCo | 670 | - | 80 | 350 | 600 | 800 | 600 | 750 |
| UFC 5 min | 10 | - | 2 | 28 | 0 | 10 à 200 | 400 | 500 |
| UFC 4h | 0 | - | 0 | 0 | 0 | 0 à 1 | 250 | 15 000 |
| UFC 24h | 0 | - | 0 | 0 | 0 | 0 | 60 à 22 000 | $10^7$ |

La considération des résultats donnés dans les tableaux ci-dessus appelle les commentaires ci-après :

- la seule présence de produit hygroscopique sur le support ($T_{gly}$) peut freiner le développement bactérien pendant quelques heures, par rapport au développement rapide visible sur le support vierge (T) (voir le tableau 3). Toutefois, le test d'hygiène (voir le tableau 4) montre parfaitement qu'après 24 heures, seule la présence de bactéricides assure une hygiène totale dudit support ;
- les résultats obtenus avec les supports $S_1$, $S_2$, et $S_3$, imprégnés de la composition 1 (S =DEG) à différents taux d'imprégnation, montrent que plus le taux d'imprégnation est élevé, meilleure est la décontamination de surface (voir le tableau 3). Cependant, même à faible taux d'imprégnation, l'hygiène interne du support est assuré (voir le tableau 4);
- l'eau présente à l'issue de la fabrication des compositions (apportée avec les bactéricides, en solutions aqueuses) s'évapore au stockage. Il a été vérifié, qu'après l'évaporation de ladite eau, la décontamination des surfaces par les supports et l'hygiène desdits supports sont toujours assurées ;
- les résultats visés sont, dans le cadre de l'invention, obtenus.

**Revendications**

1. Support imprégné d'une composition désinfectante, renfermant au moins un désinfectant D dans un solvant S, caractérisé en ce que ledit solvant S, qui intervient pour au moins 80 %, avantageusement pour au moins 90 %, en poids dans ladite composition, présente une température d'ébullition supérieure à 200°C, avantageusement supérieure ou égale à 250°C et est miscible avec l'eau à raison d'au moins 2 % en poids d'eau dans ledit solvant S.

2. Support selon la revendication 1, caractérisé en ce que ledit solvant S consiste en un solvant pur, en un mélange de solvants purs ou en un mélange d'au moins un solvant pur et d'au moins un produit P destiné à abaisser la tension de vapeur dudit solvant pur ou dudit mélange de solvants purs.

3. Support selon l'une des revendications 1 ou 2, caractérisé en ce que ledit solvant S consiste en ou contient du glycérol, du diéthylèneglycol, du triéthylèneglycol ou du dipropylèneglycol.

4. Support selon l'une quelconque des revendications 1 à 3, caractérisé en ce que ledit solvant S est per se hygroscopique et/ou renferme au moins un produit hygroscopique, tel le chlorure de calcium et/ou le chlorure de magnésium et/ou l'urée, en solution.

5. Support selon l'une quelconque des revendications 1 à 4, caractérisé en ce que ladite composition désinfectante renferme outre le(s)dit(s) désinfectant(s) D et ledit solvant S au moins un solvant S', choisi de préférence parmi l'eau, les alcools et leurs mélanges ; ledit solvant S' présentant une température d'ébullition inférieure ou égale à 200°C et étant miscible avec l'eau à raison d'au moins 2 % en poids dans ledit solvant S'.

6. Support selon l'une quelconque des revendications 1 à 5, caractérisé en ce qu'il est imprégné de ladite composition désinfectante à un taux suffisant pour relarguer une quantité efficace de désinfectant lors de son utilisation à titre d'outil désinfectant de surfaces.

7. Support selon l'une quelconque des revendications 1 à 6, caractérisé en ce qu'il consiste en du papier, en une éponge ou toile-éponge cellulosique, en un tissu , un tricot ou un nontissé, ou en une mousse synthétique.

8. Support selon l'une quelconque des revendications 1 à 7, caractérisé en ce qu'il consiste en un nontissé de fibres de polypropylène et/ou de viscose dont le grammage est compris entre 10 et 50 g/m$^2$, avantageusement entre 15 et 30 g/m$^2$.

**Patentansprüche**

1. Träger, der mit einer Desinfektionszusammensetzung imprägniert ist, die mindestens ein Desinfektionsmittel D in einem Lösungsmittel S enthält, **dadurch gekennzeichnet, dass** das Lösungsmittel S, das wenigstens 80 Gew.-% und vorteilhafterweise wenigstens 90 Gew.-% der Zusammensetzung ausmacht, eine Siedetemperatur von über 200 °C und vorteilhafterweise über oder gleich 250 °C aufweist und mit Wasser in einem Anteil von mindestens 2 Gew.-% Wasser in diesem Lösungsmittel S mischbar ist.

2. Träger nach Anspruch 1, **dadurch gekennzeichnet, dass** das Lösungsmittel S aus einem reinen Lösungsmittel, einem Gemisch von reinen Lösungsmitteln oder einem Gemisch von mindestens einem reinen Lösungsmittel und mindestens einem Produkt P besteht, das vorgesehen ist, den Dampfdruck des reinen Lösungsmittels oder des Gemischs von reinen Lösungsmitteln zu senken.

3. Träger nach Anspruch 1 oder 2, **dadurch gekennzeichnet, dass** das Lösungsmittel S aus Glycerin, Diethylenglykol, Triethylenglykol oder Dipropylenglykol besteht oder dieses enthält.

4. Träger nach einem der Ansprüche 1 bis 3, **dadurch gekennzeichnet, dass** das Lösungsmittel S per se hygroskopisch ist und/oder mindestens ein hygroskopisches Produkt wie Calciumchlorid und/oder Magnesiumchlorid und/oder Harnstoff gelöst enthält.

5. Träger nach einem der Ansprüche 1 bis 4, **dadurch gekennzeichnet, dass** die Desinfektionszusammensetzung außer dem/den Desinfektionsmittel/n D und dem Lösungsmittel S wenigstens ein Lösungsmittel S' enthält, das vorzugsweise aus Wasser, Alkoholen und ihren Gemischen ausgewählt ist, wobei das Lösungsmittel S' eine Siedetemperatur von unter oder gleich 200 °C aufweist und mit Wasser in einem Anteil von mindestens 2 Gew.-% im Lösungsmittel S' mischbar ist.

6. Träger nach einem der Ansprüche 1 bis 5, **dadurch gekennzeichnet, dass** er mit der Desinfektionszusammensetzung in einem ausreichenden Anteil imprägniert ist, damit er während seiner Verwendung als Desinfektionsmittel für Oberflächen eine wirksame Menge Desinfektionsmittel abgibt.

7. Träger nach einem der Ansprüche 1 bis 6, **dadurch gekennzeichnet, dass** er aus Papier, einem Schwamm oder einem Zelluloseschwammtuch, einem Gewebe, einer Maschenware oder einem Nonwoven oder einem Kunstschaumstoff besteht.

8. Träger nach einem der Ansprüche 1 bis 7, **dadurch gekennzeichnet, dass** er aus einem Nonwoven von Polypropylen- und/oder Viskosefasern besteht, dessen Flächengewicht 10 bis 50 g/m$^2$ und vorteilhafterweise zwischen 15 und 30 g/m$^2$ beträgt.

**Claims**

1. Support impregnated with a disinfecting composition containing at least one disinfectant D in a solvent S, characterized in that said solvent S, which is present in said composition in a proportion of at least 80% by weight, advantageously of at least 90% by weight, has a boiling point above 200°C, advantageously above or equal to 250°C, and is miscible with water in a proportion of at least 2% by weight of water in said solvent S.

2. Support according to claim 1, characterized in that said solvent S consists of a pure solvent, a mixture of pure solvents or a mixture of at least one pure solvent and at least one product P for lowering the vapour pressure of said pure solvent or said mixture of pure solvents.

3. Support according to one of claims 1 or 2, characterized in that said solvent S consists of or contains glycerol, diethylene glycol, triethylene glycol or dipropylene glycol.

4. Support according to any one of claims 1 to 3, characterized in that said solvent S is hygroscopic per se and/or contains at least one hygroscopic product, such as calcium chloride and/or magnesium chloride and/or urea, in solution.

5. Support according to any one of claims 1 to 4, characterized in that said disinfecting composition contains, in addition to said disinfectant(s) D and said solvent S, at least one solvent S' preferably selected from water, alcohols and mixtures thereof, said solvent S' having a boiling point below or equal to 200°C and being miscible with water in a proportion of at least 2% by weight in said solvent S'.

6. Support according to any one of claims 1 to 5, characterized in that it is impregnated with a sufficient amount of said disinfecting composition to release an effective amount of disinfectant when it is used as a means of disinfecting surfaces.

7. Support according to any one of claims 1 to 6, characterized in that it consists of paper, a cellulosic sponge or sponge cloth, a woven fabric, a knitted or non-woven fabric or a synthetic foam.

8. Support according to any one of claims 1 to 7, characterized in that it consists of a non-woven fabric of polypropylene and/or viscose fibres with a weight of between 10 and 50 g/m$^2$, advantageously of between 15 and 30 g/m$^2$.